# NEW EUROPEAN PATENT SPECIFICATION

(11) **EP 0 719 701 B2**
(45) Date of publication and mention of the opposition decision: **14.03.2007**
(45) Mention of the grant of the patent: 28.11.2001
(21) Application number: 95309511.4
(22) Date of filing: 28.12.1995
(51) Int. Cl.: B62M 25/04, B62K 23/06

(54) **Bicycle shifting apparatus**
Gangschaltapparat für ein Fahrrad
Dispositif de changement de vitesse pour une bicyclette

(30) Priority: 28.12.1994 JP 33878394; 28.12.1994 JP 33878494
(43) Date of publication of application: 03.07.1996
(73) Proprietor: SHIMANO INC., Osaka 590-8577 (JP)
(72) Inventor: Watarai, Etsuyoshi, c/o Shimano Inc., Osaka 590 (JP)
(74) Representative: Murnane, Graham John

(56) References cited:
- DE-U- 8 401 905
- FR-A- 2 169 538
- FR-A- 2 654 698
- US-A- 3 394 604
- US-A- 3 453 899
- US-A- 3 901 095
- US-A- 4 245 522
- US-A- 4 480 720

## Description

### BACKGROUND OF THE INVENTION

The present invention is directed to bicycle control devices and, more particularly, to a bicycle shifting apparatus having multiple remotely located levers for operating a single bicycle transmission.

Bicycles are typically equipped with a multistage front chain wheel in front and a multistage sprocket in the rear. These are connected by a chain, which provides rotational torque. The optimal gear ratio is selected, depending on the running speed, by selecting the multistage front chain wheel and multistage sprocket around which the chain is to be engaged. The shifting operations normally involve the operation of a shifting lever which can be operated from the grip position of the handle bars.

Many types of bicycle handle bars are shaped to provide for many different grip positions. For example, one position may be provided for riding at normal speed, and another position may be provided for riding at high speed, such as on hill roads, and usually designed to ward off wind resistance. Unfortunately, conventional shifting control devices are located only in a specific grip position. Thus, when the grip position is changed, it is not possible to control the shifting from the new position, making it necessary to move back to the original grip position in order to shift. Moving the hands back and forth and locating the proper grip positions wastes time and hinders high performance riding.

The present invention is directed to bicycle shifting control apparatus which allows shifting to be accomplished from different positions on the handle bars (or other structural member of the bicycle).

In accordance with the present invention, there is provided a bicycle shifting control apparatus for a bicycle transmission, the apparatus comprising a first shifting control device located at a first position on the bicycle, the first shifting control device including a first shifting lever and a first transmission element, said first shifting lever being operable for causing the first shifting control device to pull and release the first transmission element, the apparatus being characterised by further comprising: a second shifting control device located at a second position on the bicycle, the second shifting control device including a second shifting lever and a second transmission element, said second shifting lever being operable for causing the second shifting control device to pull and release the second transmission element; interlocking means for interlocking the first shifting control device and the second shifting control device so that the movement of either the first shifting lever or the second shifting lever causes the bicycle shifting control apparatus to shift the bicycle transmission; a first winding drum coupled to the first shifting lever for winding and unwinding the first transmission element and a first positioning unit coupled to the first shifting lever for positioning the first shifting lever at discrete locations.

The interlocking mechanism comprises a connector for connecting the first transmission element and the second transmission element to the bicycle transmission. If desired, the connector may take the form of a joint for connecting the first transmission element and the second transmission element together and to a third transmission element so that the third transmission element may be connected to the bicycle transmission.

US-A-4 245 522 discloses a bicycle braking mechanism having a first brake lever connected to a main brake cable and a second brake lever connected to the first brake lever by a secondary brake cable, so that actuation of either of the first and second brake levers actuates the main brake cable.

### BRIEF DESCRIPTION OF THE DRAWINGS

Figure 1 is an oblique view of the bars provided with a particular embodiment of a bicycle shifting mechanism according to the present invention;
Figure 2 is a front view depicting a particular embodiment of fixtures for fixing cables to the handle bars;
Figure 3 is a cross sectional view of a particular embodiment of a shift control device shown in Figure 1;
Figure 4 is a partial cross sectional view of a shifting lever taken along line IV-IV in Figure 3;
Figure 5 is a plan view of a particular embodiment of a plate spring used in the shifting control device shown in Figure 3;
Figure 6 is a plan view of a particular embodiment of a position-determining plate used in the shifting control device shown in Figure 3;
Figure 7 is a plan view of a particular embodiment of a clamp used in the shifting control device shown in Figure 3;
Figure 8 depicts a particular embodiment of a structure for fixing the cables and wires of a corresponding pair of the shifting control devices shown in Figure 1; and
Figures 9A-9B depict an alternative embodiment of a structure for fixing the cables and wires of a corresponding pair of the shifting control devices shown in Figure 1.

### DETAILED DESCRIPTION OF THE EMBODIMENTS

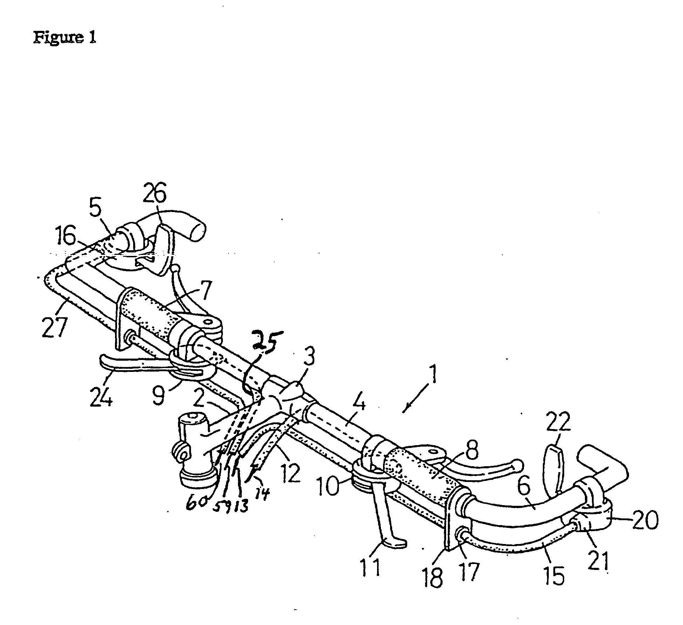

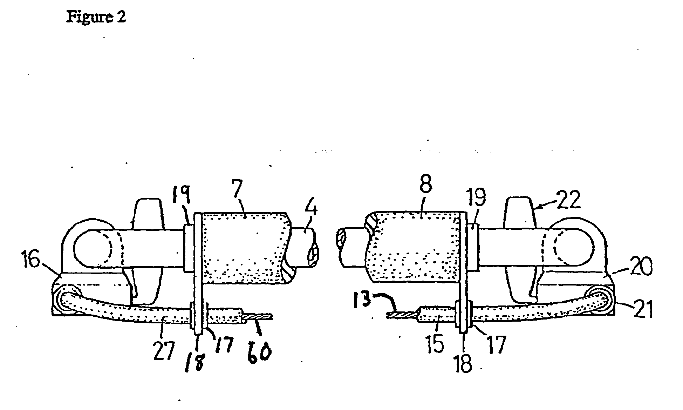

Figures 1 and 2 show handle bars provided with a particular embodiment of a bicycle shifting control mechanism according to the present invention. In this embodiment, the handle bars 1 are handle bars for a mountain bike. A horizontally arranged stem component 2 is connected to a bicycle head pipe (not shown), and a cross component 4 is fixed to a stem bracket 3 at the end of the stem component 2. The cross component 4 is made of a metal pipe, both ends of which are bent at about a 90 degree angle. These parts constitute the side grips 5 and 6. Tubular synthetic resin grip members 7 and 8 are located on the cross component 4. These grip members 7 and 8 are gripped when the handle bars are operated during normal running for steering purposes.

A first front shifting control device 9 and a first rear shifting control device 10 are located transversely to the grip members 7 and 8. The first front shifting control device 9 is used to select a front chain wheel (not shown) for transferring the chain. More specifically, a first front shifting lever 24 in the first front shifting control device 9 is rotated to pull a wire 59 inside a cable 25 so as to drive and shift the front derailleur (not shown). The first rear shifting control device 10 is used to select one of the rear multistage sprockets (not shown). More specifically, a first rear shifting lever 11 in the first rear shifting control device 10 is rotated to pull a wire 14 in a cable 12 so as to drive the rear derailleur (not shown) and shift gears. The structure and function of the first rear shifting control device 10 is the same as the first front shifting control device 9 and thus will not be described in detail.

A second front shift control device 16 is located at the side grip component 5. This second front shifting control device 16 has essentially the same structure and function as the first front shifting control device 9, allowing front shifting to be controlled from this position as well. A second front shifting lever 26 in the second front shifting control device 16 is rotated to pull a wire 60 in a cable 27 so as to drive and shift the front derailleur (not shown). A second rear shifting control device 20 is located at the side grip component 6 on the same handle bars 1. The second rear shifting control device 20 has essentially the same structure and function as the first rear shifting control device 10, allowing rear shifting to be controlled from this position as well. A second rear shifting lever 22 in the second rear shifting control device 20 is rotated to pull a wire 13 in a cable 15 so as to drive and shift the rear derailleur (not shown).

The intermediate sections of the cables 15 and 27 are held by an annular cable clip 17. The cable clip 17 is fixed to the bottom of a plate-shaped anchoring metal fixture 18. The top of the anchoring metal fixture 18 is fixed with a nut 19 to one end of the corresponding grip member 7,8, A cable adjusting unit 21 is provided at the inlet of second rear shifting control device 20. This cable adjusting unit 21 is designed to fine time the angle and position of the second rear shifting lever 22 by moving the outer casing 15 and the cable 13 inside in relation to each other. A similar cable adjusting unit 23 is provided at the inlet of second front shifting control unit 16.

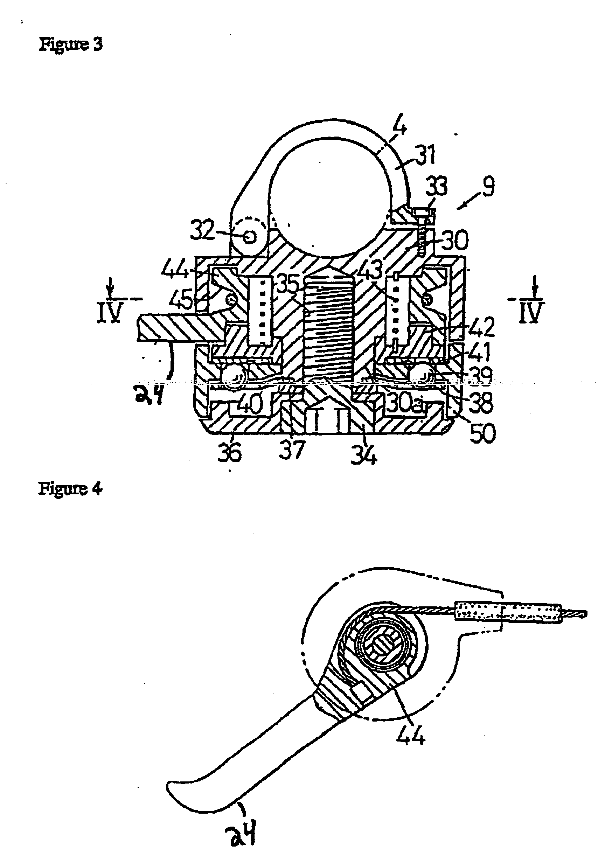

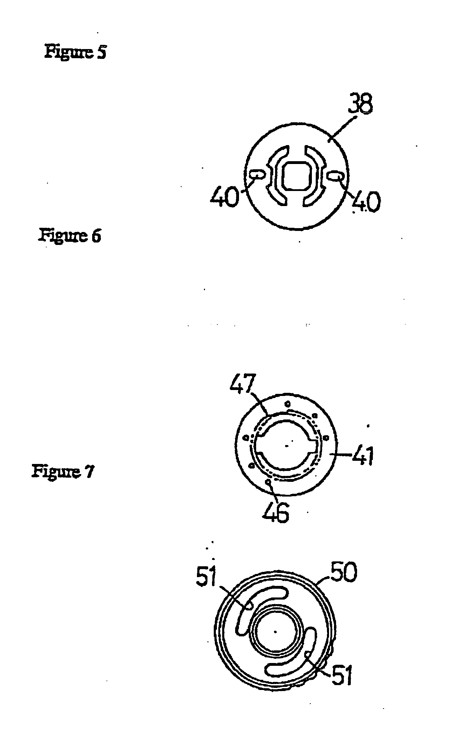

Figure 3 is a cross section depicting the interior of the first front shifting control device 9, and Figure 4 is a partial cross section of the shifting lever when taken along line IV-IV in Figure 3. As shown in Figure 3, a pedestal 30 comprises the main body of the shifting control device and is fixed by a band member 31 to the cross component 4. One end of the band member 31 is established on the pedestal 30 so that it is rockable at a shaft 32, while the other end is fixed to the cross component 4 by a bolt 33.

A fixing bolt 34 is screwed into a screw hole 35 on the pedestal 30. A floor cover 36, a metal washer 37, and a plate spring 38 are fixed between the pedestal 30 and the fixing bolt 34. The floor cover 36 is a cover for the base, and the plate spring 38 is provided to push the position-determining ball 39 upward. The plate spring 38 is in the form of a disk, and ball-retaining holes 40 for determining the position of, and holding, the position-determining ball 39 are formed in the radial direction (see Figure 5). The position-determining ball 39 can accordingly move only in the radial direction of the ball-retaining holes 40.

A position-determining plate 41 is arranged in the direction opposite the plate spring 38, with the position-determining ball 39 sandwiched between. The position-determining plate 41 is integrally fixed to the end face of a rotating cylinder member 42. Three position-determining holes 46 as well as position-determining holes 46 that differ from these by 180 degrees are formed in outer peripheral positions on the position-determining plate 41, for a total of six position-determining holes 46. Three position-determining holes 46 are located at the low L, middle M, and top T shifting ratios of the front shifting device. One position-determining ball 39 is inserted for these three position-determining holes 46, for a total of two position-determining balls 39 for all six holes. Friction components 47 in the form of rings are formed along the inside periphery of the position-determining holes 46 of the position-determining plate 41.

A clamp 50 is slidably and rotatably located on the cylindrical component 30a of the pedestal 30. Ball-retaining holes 51 are formed in the circumferential direction in the clamp 50. The position-determining balls 39 are held in the ball-retaining holes 51. The center position of the ball-retaining holes 51 expands in the radial direction. When the clamp 50 is rotated, the position-determining ball 39 in the ball-retaining hole 51 is thus moved in the radial direction and moves to the friction component 47 of the position-determining plate 41, where it is clamped. The rotating cylinder member 42 is slidably and rotatably located in part of the cylindrical part 30a of the pedestal 30.

A coiled return spring 43 is located between the rotating cylinder component 42 and the pedestal 30. One end of spring 43 is fixed to the rotating cylinder component 42, and the other end is fixed to the pedestal 30. The return spring 43 is energized in the direction counter to the energizing force of a return spring in the rear shifter (not shown), so as to equalize the torque needed to operate the first front shifting lever 24.

A wire-winding drum 44 is fixed along the outer periphery of the rotating cylinder component 42. A U-shaped concave part 45 is formed along the outer periphery of the wire-winding drum 44. As shown in Figure 4, the distance in the radial direction of the concave component 45 varies depending on the angle and position. The first front shifting lever 24 is integrally provided on the wire-winding drum 44. This first front shifting lever 24 is rotated to allow the wire-winding drum 44 to be rotated. The concave component 45 of the wire-winding drum 44 is for winding the push-pull cable 59. Since the distance in the radial direction varies depending on the angle and position, the lever ratio varies according to the angle and position when the first front shifting lever 24 is operated.

To operate the first front shifting control device 9, the first front shifting lever 24 is operated so as to rotate the wire-winding drum 44. When the wire-winding drum 44 is thus rotated, the push-pull cable 59 is wound along the concave component 45, pulling the wire in the cable 25 and effecting the necessary shifting operation. When the wire-winding drum 44 is rotated, the integral rotating cylinder component 42 and position-determining plate 41 are also rotated with it at the same time. Although the position-determining ball 39 can move only in the radial direction by means of the ball-retaining hole 40, it is prevented from moving in the radial direction by means of the ball-retaining hole 51 of the clamp 50, so that it cannot move.

As a result of this rotation, the position-determining ball 39, which has stopped, is inserted into the next position-determining hole 46 of the position-determining plate 41, where it functions to determine position. That is, if the initial position is the low L position, the position of the first front shifting lever 24, winding drum 44, rotating cylinder component 42, and position-determining plate 41 moves to the next middle M position.

The internal structure of the second front shifting control device 16 is the same as that of the first front shifting device 9 and thus will not be described in detail. Similarly, a detailed description will also be omitted for the internal structure of the first rear shifting control device 10 and second rear shifting control device 20 since they are essentially the same, except for the different number of shifting stages. Alternatively, these shifting control devices may have another well-known structure.

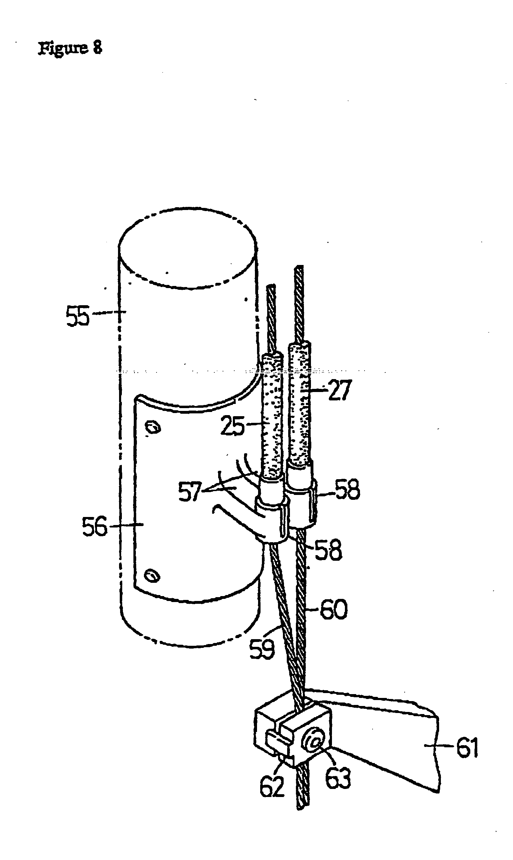

Figure 8 illustrates the method for fixing the cables and wires of the first and'second front shifting control devices. *A* bracket 56 is welded and/or fixed by rivets to the vertical frame 55. Two cable support arms 57 protrude from the bracket 56. Tubular cable receivers 58 and 58 are integrally provided at the tip of each cable support arm 57. These cable receivers 58 are provided with floors. Holes through which wire is passed are opened in these floors, and cable caps for cables 25 and 27 are inserted into the cable receivers 58 to support them. One end each of the wire 59 of the cable 25 and of the wire 68 of the cable 27 is fixed to a front derailleur driving link 61. More specifically, one end of each of the wires 59 and 60 is inserted into the groove of a fixing plate 62, and the fixing plate 62 is fixed to the drive link 61 by a cable fixing bolt 63. Thus, when the first front shifting lever 24 or second front shifting lever 26 is operated, the drive link 61 constituting the four-node link mechanism of the front derailleur can be operated.

In this embodiment, when either of the first front shifting lever 24 or second front shifting lever 26 is operated, it is not possible to effect shifting with a shifting ratio higher than that because the drive link 61 cannot be returned, i.e., is in a pulled state, when either one of the shifting control devices is being operated. To avoid this, the lever that is not being used should be in the lowest shifting ratio, such as the low L position. Thus, for example, before the first front shifting lever 24 is operated, the second front shiftiag lever 26 should placed in the low L position initially. Thereafter, when the first front shifting lever 24 of the first front shifting control device 9 is operated, the wire 59 inside the cable 25 is pulled, driving the drive link 61. This, in turn, allows the front derailleur to be operated, transferring the sprocket chain (not shown) to effect shifting. The second front shifting lever 26 of the second front shifting control device 16 can be similarly operated, but in that case, the first front shifting lever 24 should initially be in the low L position.

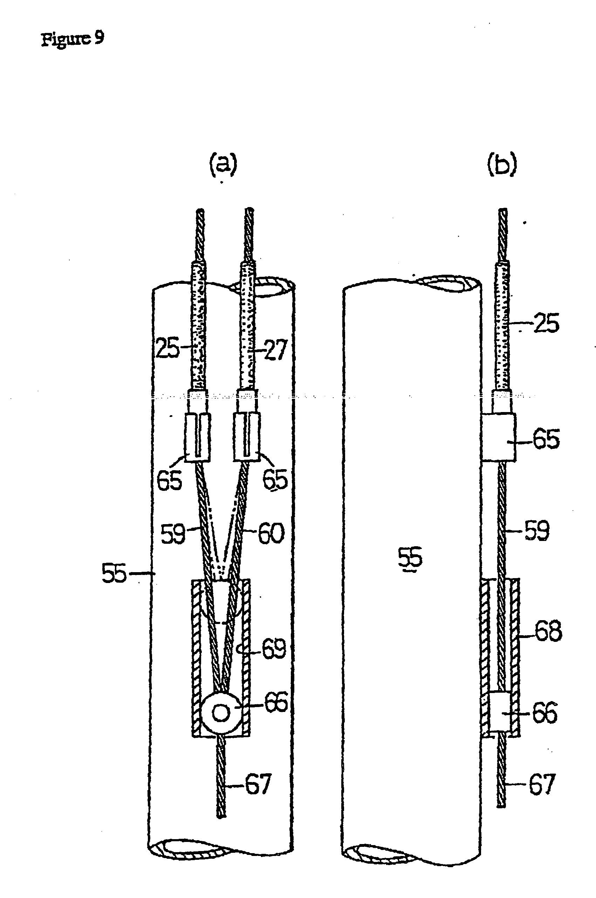

Figures 9a and 9b are front and side cross sections of a second method for fixing the cables 59,60 to the front derailleur. As shown therein, two cable receivers 65 are fixed by welding to the vertical frame 55, and holes are provided at the bottoms to pass wires through. Cable caps for the cables 25 and 27 are inserted into the cable receivers 65 and 65 to support them.

One end each of the wire 59 of the cable 25 and of the wire 60 of the cable 27 is connected to a joint 66. The joint 66 is further connected to one end of a wire 67, while the other end of the wire 67 is fixed to the drive link 61 that drives the front derailleur. The joint 66 is formed in the shape of a cylinder and is slidably inserted within a guide face 69 of a guide 68.

When the first front shifting lever 24 of the first front shifting control device 9 is operated, the wire 59 inside the cable 25 is pulled. When the wire 59 is thus pulled, the joint 66 is guided inside the guide 68, and the joint 66 is moved up and down. The up and down movement of this joint 66 pulls and releases the wire 67 for controlling drive link 61 and thus operating the front derailleur.

While the above is a description of various embodiments of the present invention, further modifications may be employed without departing from the scope of the present invention.

Thus, the scope of the invention should not be limited by the specific structures disclosed. Instead, the true scope of the invention should be determined by the following claims. Of course, although labeling symbols are used in the claims in order to facilitate reference to the figures, the present invention is not intended to be limited to the constructions in the appended figures by such labeling.

## Claims

1. A bicycle shifting control apparatus for a bicycle transmission, the apparatus comprising a first shifting control device (9, 10) located at a first position on the bicycle, the first shifting control device including a first shifting lever (24, 11) and a first transmission element (59, 14), said first shifting lever (24, 11) being operable for causing the first shifting control device (9, 10) to pull and release the first transmission element (59, 14), the apparatus being **characterised by** further comprising:
a second shifting control device (16, 20) located at a second position on the bicycle, the second shifting control device (16, 20) including a second shifting lever (26, 22) and a second transmission element (60, 13), said second shifting lever (26, 22) being operable for causing the second shifting control device (16, 20) to pull and release the second transmission element (60, 13);
interlocking means (72, 63, 66) for interlocking the first shifting control device (9, 10) and the second shifting control device (16, 20) so that the movement of either the first shifting lever (24,11) or the second shifting lever (26,22) causes the bicycle shifting control apparatus to shift the bicycle transmission;
a first winding drum (44) coupled to the first shifting lever (24, 11) for winding and unwinding the first transmission element (59, 14); and
a first positioning unit (38, 39, 41) coupled to the first shifting lever (24, 11) for positioning the first shifting lever (24, 11) at discrete locations;
wherein the interlocking means comprises a connector (63, 66) for connecting the first transmission element (59, 14) and the second transmission element (60, 13) to the bicycle transmission.

2. The apparatus according to Claim 1 wherein the connector (66) comprises a joint for connecting the first transmission element (59, 14) and the second transmission element (60, 13) together and to a third transmission element (67) so that the third transmission element (67) may be connected to the bicycle transmission.

3. The apparatus according to Claim 2 further comprising a guide (69) in which the joint is slidingly disposed.

4. The apparatus according to any preceding claim wherein the second shifting control device (16, 20) further comprises:
a second winding drum (44) coupled to the second shifting lever (26, 22) for winding and unwinding the second transmission element (60, 13).

5. The apparatus according to Claim 4 wherein said second shifting control device (16,20) further comprises:
a second positioning unit (38, 39, 41) coupled to the second shifting lever (26, 22) for positioning the second shifting lever (26, 22) at discrete locations.

6. The apparatus according to any of claims 1 to 4 wherein the second shifting lever (26, 22) has first and second ends, wherein the second shifting lever (26, 22) is pivotably coupled to the remainder of the second shifting control device (16, 20) between the first end and the second end, wherein the first end has a manual control surface, and wherein the second end is connected to the second transmission element (60, 13) .

7. The apparatus according to any preceding Claim wherein at least one of the first transmission element (59, 14) and the second transmission element (60, 13) comprises a cable.

## Patentansprüche

1. Ein Fahrradschaltungssteuerungsgerät für eine Fahrradgangschaltung, wobei das Gerät eine erste Schaltungssteuerungsvorrichtung (9, 10) beinhaltet, die sich an einer ersten Position auf dem Fahrrad befindet, wobei die erste Schaltungssteuerungsvorrichtung einen ersten Schalthebel (24, 11) und ein erstes Gangschaltungselement (59, 14) umfasst, wobei der erste Schalthebel (24, 11) betätigt werden kann, um das Anziehen und Loslassen des ersten Gangschaltungselements (59, 14) durch die erste Schaltungssteuerungsvorrichtung (9, 10) zu bewirken, wobei das Gerät **dadurch gekennzeichnet ist, dass** es ferner Folgendes beinhaltet:
eine zweite Schaltungssteuerungsvorrichtung (16, 20), die sich an einer zweiten Position auf dem Fahrrad befindet, wobei die zweite Schaltungssteuerungsvorrichtung (16, 20) einen zweiten Schalthebel (26, 22) und ein zweites Gangschaltungselement (60, 13) umfasst, wobei der zweite Schalthebel (26, 22) betätigt werden kann, um das Anziehen und Loslassen des zweiten Gangschaltungselements (60, 13) durch die zweite Schaltungssteuerungsvorrichtung (16, 20) zu bewirken;
ein Verriegelungsmittel (72, 63, 66) zum Verriegeln der ersten Schaltungssteuerungsvorrichtung (9, 10) mit der zweiten Schaltungssteuerungsvorrichtung (16, 20), so dass die Bewegung von entweder dem ersten Schalthebel (24, 11) oder dem zweiten Schalthebel (26, 22) das Umschalten der Fahrradgangschaltung durch das Fahrradschaltungssteuerungsgerät bewirkt;
eine erste Drahthaspel (44), die an den ersten Schalthebel (24, 11) zum Aufwickeln und Abwickeln des ersten Gangschaltungselements (59, 14) gekoppelt ist; und
eine erste Positionierungseinheit (38, 39, 41), die an den ersten Schalthebel (24, 11) zum Positionieren des ersten Schalthebels (24, 11) an verschiedenen Positionen gekoppelt ist;
wobei das Verriegelungsmittel ein Verbindungsglied (63, 66) zum Verbinden des ersten Gangschaltungselements (59, 14) und des zweiten Gangschaltungselements (60, 13) mit der Fahrradgangschaltung beinhaltet.

2. Gerät gemäß Anspruch 1, wobei das Verbindungsglied (66) ein Verbindungsstück zum Verbinden des ersten Gangschaltungselements (59, 14) zusammen mit dem zweiten Gangschaltungselement (60, 13) und mit einem dritten Gangschaltungselement (67), so dass das dritte Gangschaltungselement (67) mit der Fahrradgangschaltung verbunden werden kann, beinhaltet.

3. Gerät gemäß Anspruch 2, das ferner eine Führung (69) beinhaltet, in der das Verbindungsstück gleitend angeordnet ist.

4. Gerät gemäß einem der vorhergehenden Ansprüche, wobei die zweite Schaltungssteuerungsvorrichtung (16, 20) ferner Folgendes beinhaltet:
eine zweite Drahthaspel (44), die an den zweiten Schalthebel (26, 22) zum Aufwickeln und Abwickeln des zweiten Gangschaltungselements (60, 13) gekoppelt ist.

5. Gerät gemäß Anspruch 4, wobei die zweite Schaltungssteuerungsvorrichtung (16, 20) ferner Folgendes beinhaltet:
eine zweite Positionierungseinheit (38, 39, 41), die an den zweiten Schalthebel (26, 22) zum Positionieren des zweiten Schalthebels (26, 22) an verschiedenen Positionen gekoppelt ist.

6. Gerät gemäß einem der Ansprüche 1 bis 4, wobei der zweite Schalthebel (26, 22) ein erstes und ein zweites Ende aufweist, wobei der zweite Schalthebel (26, 22) drehbar an den restlichen Teil der zweiten Schaltungssteuerungsvorrichtung (16, 20) zwischen dem ersten Ende und dem zweiten Ende gekoppelt ist, wobei das erste Ende eine Handsteuerungsfläche aufweist und wobei das zweite Ende mit dem zweiten Gangschaltungselement (60, 13) verbunden ist.

7. Gerät gemäß einem der vorhergehenden Ansprüche, wobei mindestens eines von dem ersten Gangschaltungselement (59, 14) und dem zweiten Gangschaltungselement (60, 13) ein Kabel beinhaltet.

## Revendications

1. Un appareil de commande de changement de vitesse de bicyclette pour une transmission de bicyclette, l'appareil comprenant un premier dispositif de commande de changement de vitesse (9, 10) placé à une première position sur la bicyclette, le premier dispositif de commande de changement de vitesse incluant un premier levier de changement de vitesse (24, 11) et un premier élément de transmission (59, 14), ledit premier levier de changement de vitesse (24,11) pouvant être actionné pour amener le premier dispositif de commande de changement de vitesse (9, 10) à tirer et relâcher le premier élément de transmission (59, 14), l'appareil étant **caractérisé en ce qu'**il comprend de plus:
un deuxième dispositif de commande de changement de vitesse (16, 20) placé à une deuxième position sur la bicyclette, le deuxième dispositif de commande de changement de vitesse (16, 20) incluant un deuxième levier de changement de vitesse (26, 22) et un deuxième élément de transmission (60, 13), ledit deuxième levier de changement de vitesse (26, 22) pouvant être actionné pour amener le deuxième dispositif de commande de changement de vitesse (16, 20) à tirer et relâcher le deuxième élément de transmission (60, 13) ;
un moyen de verrouillage réciproque (72, 63, 66) destiné à verrouiller réciproquement le premier dispositif de commande de changement de vitesse (9, 10) et le deuxième dispositif de commande de changement de vitesse (16, 20) afin que le déplacement soit du premier levier de changement de vitesse
(24, 11), soit du deuxième levier de changement de vitesse (26, 22) amène l'appareil de commande de changement de vitesse de bicyclette à changer la transmission de bicyclette ;
un premier enrouleur (44) couplé au premier levier de changement de vitesse (24, 11) pour enrouler et dérouler le premier élément de transmission (59, 14) ; et
un premier ensemble de positionnement (38, 39, 41) couplé au premier levier de changement de vitesse (24, 11) pour positionner le premier levier de changement de vitesse (24, 11) à des emplacements distincts ;
dans lequel le moyen de verrouillage réciproque comprend un élément de raccordement (63, 66) destiné à raccorder le premier élément de transmission (59, 14) et le deuxième élément de transmission (60, 13) à la transmission de bicyclette.

2. L'appareil selon la revendication 1 dans lequel l'élément de raccordement (66) comprend une articulation destinée à raccorder le premier élément de transmission (59, 14) et le deuxième élément de transmission (60, 13) l'un à l'autre et à un troisième élément de transmission (67) afin que le troisième élément de transmission (67) puisse être raccordé à la transmission de bicyclette.

3. L'appareil selon la revendication 2 comprenant de plus un guide (69) dans lequel l'articulation est disposée de façon à coulisser.

4. L'appareil selon n'importe quelle revendication précédente dans lequel le deuxième dispositif de commande de changement de vitesse (16, 20) comprend de plus :
un deuxième enrouleur (44) couplé au deuxième levier de changement de vitesse (26, 22) pour enrouler et dérouler le deuxième élément de transmission (60, 13).

5. L'appareil selon la revendication 4 dans lequel ledit deuxième dispositif de commande de changement de vitesse (16, 20) comprend de plus :
un deuxième ensemble de positionnement (38, 39, 41) couplé au deuxième levier de changement de vitesse (26, 22) destiné à positionner le deuxième levier de changement de vitesse (26, 22) à des emplacements distincts.

6. L'appareil selon n'importe lesquelles des revendications 1 à 4, dans lequel le deuxième levier de changement de vitesse (26, 22) a des première et deuxième extrémités, dans lequel le deuxième levier de changement de vitesse (26, 22) est couplé de façon à pouvoir pivoter au reste du deuxième dispositif de commande de changement de vitesse (16, 20) entre la première extrémité et la deuxième extrémité, dans lequel la première extrémité a une surface de commande à main, et dans lequel la deuxième extrémité est raccordée au deuxième élément de transmission (60, 13).

7. L'appareil selon n'importe quelle revendication précédente, dans lequel au moins un élément parmi le premier élément de transmission (59, 14) et le deuxième élément de transmission (60, 13) comprend un câble.
